# EUROPEAN PATENT SPECIFICATION

(11) **EP 1 668 983 B1**
(45) Date of publication and mention of the grant of the patent: **03.10.2007**
(21) Application number: 06075676.4
(22) Date of filing: 08.07.2005
(51) Int. Cl.: A01K 97/12

(54) **Angling apparatus**
Vorrichtung zum Angeln
Dispositif pour la pêche à la ligne

(30) Priority: 09.07.2004 GB 0415475
(43) Date of publication of application: 14.06.2006
(62) Divisional of application: 05254307.1
(73) Proprietor: FOX INTERNATIONAL GROUP LIMITED, Hainault, Essex IG6 3UT (GB)
(72) Inventor: Fox, Clifford Royston, Danbury, Essex CM3 4PG (GB); Simpson, Nigel, Ventnor, Isle of Wight CO38 38Z (GB)
(74) Representative: Crouch, David John

(56) References cited:
- EP-A- 1 147 704
- GB-A- 2 289 603
- GB-A- 2 394 876

## Description

The present invention relates to angling apparatus comprising a fish-bite detector with a transmitter and a remote unit with a receiver which serves to receive a detect signal transmitted by the transmitter thereby to enable the remote unit to generate an alarm signal in dependence upon the detect signal generated by the detector.

Such transmission of a detect signal by the transmitter of the detector to the remote unit enables the characteristics of an alarm signal, for example a pulsed audio alarm signal, which is generated by the detector upon such detection, to be reproduced synchronously by the remote unit.

A problem encountered with this is that if the detector transmitter is transmitting a radio signal at the same time as an audio signal is being generated by the detector, the power available to the detector may be insufficient to do both properly. The radio signal may be weakened, and/or the audio signal distorted.

The present invention seeks to avoid this problem.

A fish-bite detector with a transmitter and a remote control which is intended to reduce the power consumption is known from document GB-A-2289603.

The present invention is directed to angling apparatus comprising a fish-bite detector according to claim 1 having (a) a sensor coupled to the line of a fishing rod when the apparatus is in use such as to issue pulsed line-movement signals of a duration indicative of the movement of the line and (b) a radio transmitter connected to transmit transmitter signals corresponding to the pulsed line-movement signals, the apparatus further comprising a remote unit having a radio receiver and a signal generator coupled to the receiver and adapted to generate pulsed line-movement signals corresponding to those generated by the sensor of the detector, in which the detector and the receiver unit have respective alarms, especially but not exclusively audio alarms, connected to produce alarm indications in dependence upon the pulsed line-movement signals, characterised in that the detector is provided with a timer connected to the sensor to measure the duration of successive pulses of the pulsed line-movement signal, and a memory connected to the timer to store successive entries from the timer respectively indicative of the lengths of a succession of such durations, an alarm driver being connected to the memory and to the alarm of the detector so that the alarm is activated for successive durations corresponding to the entries in the memory in the same order as they were entered into the memory, and the transmitter also being connected to the memory so that the transmitter signals carry the entries to the receiver unit, the alarm of the receiver unit being connected to the radio receiver so that it is also activated for successive durations corresponding to the entries in the memory in the same order as they were entered into the memory.

As a result, the same alarm signal is generated simultaneously and synchronously by the receiver unit alarm as by the detector alarm, albeit with a small and insignificant delay in relation to the original pulsed line-movement signals issued by the sensor.

The memory may be a stack memory capable of storing a stack of such entries, successive durations of successive pulses of the line-movement pulsed signal being pushed onto the stack from the timer, and entries being popped from the stack in the order in which they were entered, to the transmitter and to the alarm driver of the detector.

The duration of the transmission times from the detector transceiver may be reduced in this way, reducing the likelihood of interference or distortion that would be caused by simultaneous transmission and alarm actuation. The likelihood is even further reduced if the detector is provided with an inhibitor device or a sequencing device connected to ensure that popping only occurs when the detector alarm is not being activated.

An example of angling apparatus embodying the present invention is shown in the accompanying drawings, in which:
- Figure 1: shows a front elevational view of a fish-bite detector of the apparatus;
- Figure 2: shows a front elevational view of a remote control for the detector shown in Figure 1;
- Figure 3: shows a diagrammatic representation of the electronic circuitry of the detector shown in Figure 1;
- Figure 4: shows in diagrammatic form the electrical circuitry of the remote control unit in Figure 2;
- Figures 5 and 6: show in diagrammatic form the representations of equivalent circuits of the detector and the remote control of Figures 1 and 2, respectively;
- Figure 7: is a flow chart showing the manner in which signals are generated and transmitted from the detector to the remote control unit by a polled interrupt method; and
- Figure 8: is a flow chart showing the manner in which signals are generated and transmitted from the detector to the remote control unit by a hardware interrupt method.

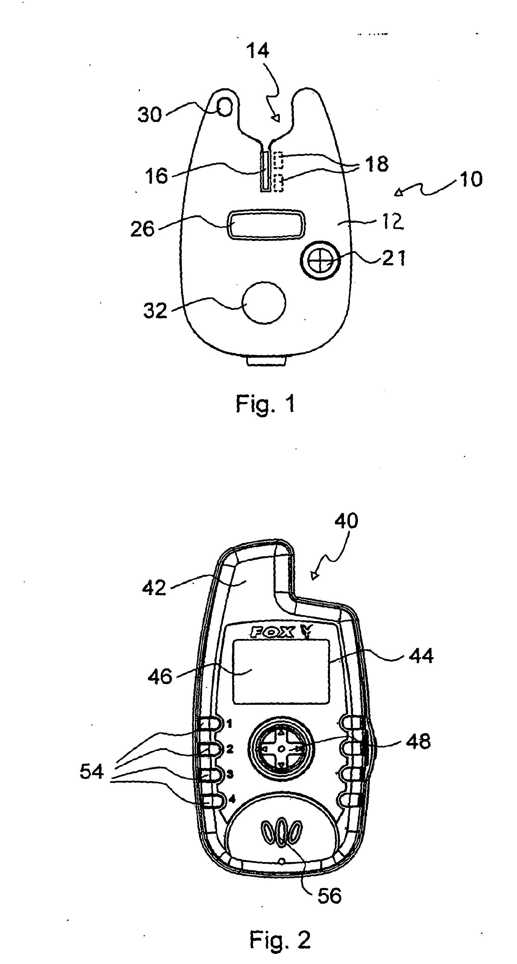

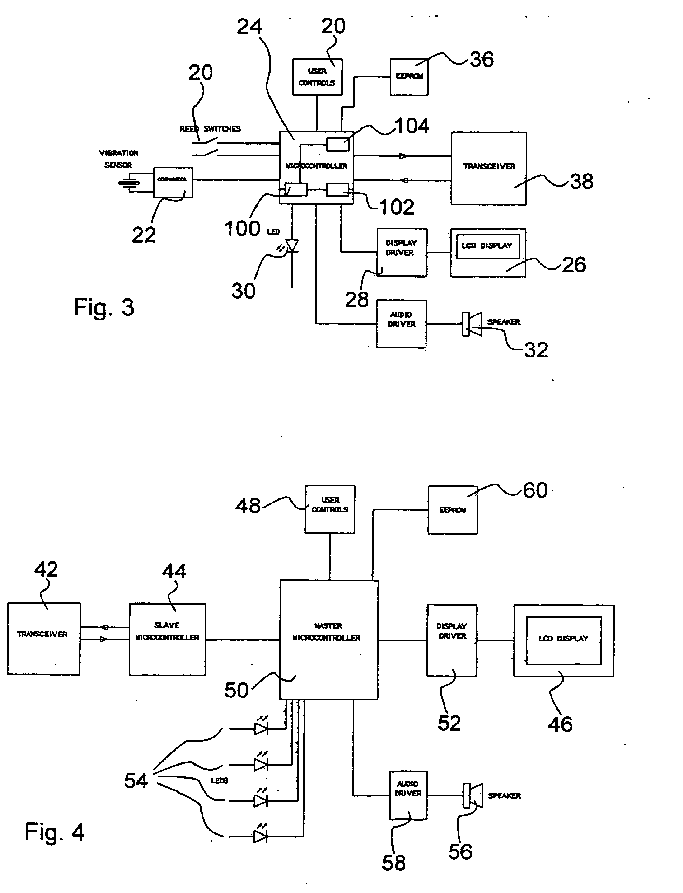

The bite detector 10 shown in Figure 1 comprises a housing 12 formed with a hollow 14 for receiving an angling rod (not shown), a wheel 16 over which passes a line on such a rod (not shown) when the detector is in use and magnets 18 inside the housing 12 which rotate with the wheel 16 so as to open and close two reed switches 20 (shown in Figure 3). The wheel 16 is also coupled to a vibration sensor 22 shown in Figure 3.

As shown more clearly in Figure 3, the reed switches 20 and the vibration sensor 22 are connected to respective inputs of a microcontroller 24. A rocker switch 21 on the front face of the housing 12 constitutes user controls effected via the microcontroller 24, states of which are indicated on the LCD display 26, which is driven by the microcontroller 24 via a display drive 28.

Bite alarm signals triggered by the reed switches 20 and/or the vibration sensor 22, and issued by the microcontroller 24 cause illumination of a light emitting diode 30 and/or sounding of a buzzer or speaker 32 driven by the microcontroller 24 via an audio driver 34. Preselected states of the microcontroller can be stored in an eeprom 36 (shown in Figure 3), as well as securing PIN numbers. Signals to and from the microcontroller can be received by and transmitted from a radio transceiver 38 connected to the microcontroller 34 accordingly.

A remote control unit 40 (shown in Figures 2 and 4) comprises a housing 42 and is provided with an aperture 44 to reveal an LCD display 46.

The housing 42 has a further aperture through which extends a rocker switch 48 constituting the user controls for the remote control unit 40. The user controls 48 are therefore connected to a master microcontroller 50 (shown in Figure 4) of the remote control unit 40. The microcontroller 50 is also connected to drive the LCD display 46 via an LCD drive 52. A transceiver 54 is connected to transmit signals which are received from a slave microcontroller 44, and forward received signals thereto. The slave microcontroller 44 is connected to the master microcontroller 50.

Four light emitting diodes 54 are connected to the master microcontroller, along with a buzzer or speaker 56, via an audio driver 58.

An eeprom 60 which can store memorised states of the microcontroller 50 is also connected thereto.

The fish-bite detector 10 and the remote control unit 40 are provided with batteries (not shown) to provide electrical power for their operation.

Although one bite detector is shown in Figure 1, up to four such bite detectors, all as shown in Figure 1, may all be controlled by the remote control unit 40. Indeed, the control unit can easily be adapted to control any number of fish-bite detectors.

With the bite detector 10 in use, adjustment parameters, such as the volume of the buzzer or speaker 32, the tone thereof, the sensitivity of the device from the point of view of forward and backward movement of a line which passes over the wheel 16, the sensitivity of the detector from the point of view of vibrations on the line (not shown) propagated from the wheel to the vibration sensor 22, and perhaps the brightness of night lights (not shown) present on the detector 10, may all be adjusted by means of the rocker switch 21. The microcontroller 24 causes a menu to be displayed on the LCD display 26 via a display drive 28, as well as options associated with each listing in the menu, and selections from those options can be made using the rocker switch 21.

All these adjustments can also be effected by way of the remote control unit 40, using the rocker switch 48 and viewing the LCD display 46 as driven by the microcontroller 50 via the display driver 52. This is achieved by the transmission of coded digital radio signals by the slave microcontroller 44 and the transceiver unit 42 of the remote control unit 40. The microcontroller 50 includes within the listings of the menu it displays on the LCD display 46 the possibility of selecting one of up to four fish-bite detectors to be addressed by the remote control unit 40. Furthermore, the menu listings for the remote control unit 40 also include adjustments of the parameters pertaining to the remote control unit 40 itself, such as volume and/or tone of the buzzer or speaker 56. The brightness of night lights (not shown) on the remote control unit 40 may also be adjusted in this way.

The manner in which the master microcontroller 50 is used to control adjustment of parameters of the detector 10 is determined by the manner in which the microcontroller 50 is programmed, as well as the manner in which the microcontroller 24 of the detector itself is programmed.

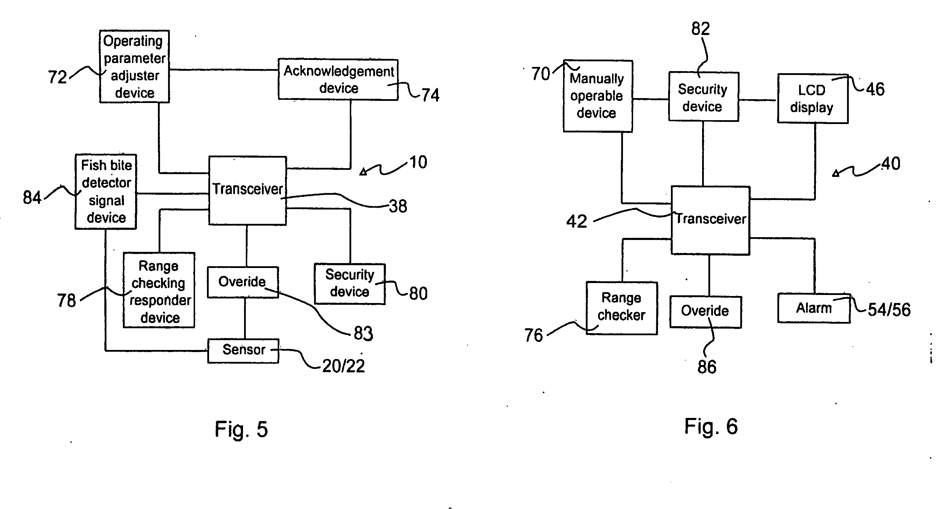

Figures 5 and 6 show diagrammatically equivalent circuits which may be used to effect the same control of the apparatus as is actually achieved by appropriate programming of the microcontrollers 24 and 50. Whilst therefore there may not be any single physical component in the detector or the remote control unit which would embody one of the illustrated parts of the equivalent circuits shown in Figure 6, nonetheless at some stage in the operation of the programmed microcontrollers 24 and 50, there will be a certain combination of switches which constitute each of the component devices illustrated in Figures 5 and 6.

Thus, with the devices installed for use and powered up, the user may first select one of up to four detectors controlled by the remote control unit 40 by cycling through the menu until selection of the detector is reached, whereupon the particular detector desired may be selected by operation of the rocker switch 48. Having made that selection, a particular parameter of that detector, or the first of a number of such parameters which are to be adjusted, is selected, whereupon the particular adjustment desired is selected. The condition of the microcontroller is transferred to the slave microcontroller 44 and to the transceiver 42 where a digital encoded signal is transmitted. In this way, the rocker switch 48 and the microcontroller 50 constitute a manually operable device 70 shown in Figure 6 to issue a parameter adjustment signal from the transceiver 42 to the selected detector 10 where it is received by the transceiver 38. These signals are decoded and passed to the microcontroller 24 to effect such changes of the selected parameter as could have been effected by the rocker switch 21 of the detector 10. In this regard, the microcontroller 24 acts as an operating parameter adjustment device 72 of the detector 10.

Continuing with the programme which determines the operation of the microcontroller 24, an acknowledgement signal is issued to the transceiver 38. Relevant switching parts of the microcontroller 24 acts as an acknowledgement device 74 of the detector 10. The coded acknowledgement signal is transmitted from the transceiver 38 to the transceiver 42. The microcontroller 50 as a result causes an indication to be shown on the LCD display 46, to confirm receipt of the acknowledgement signal.

The carrier frequency of transmissions from the transceiver 38 and that of the transceiver 42 are different to reduce the likelihood of interference between detectors. This also helps to save power consumption by the detector.

The microcontroller 50 is further programmed to emit range checking signals at periodic intervals. These are received by the transceiver 42 and transmitted to the detector 10. Relevant switching devices within the microcontroller 50 thereby act as a range checking device 76 of the remote control unit 40. Upon receipt of such a signal by the transceiver 38, the latter forwards those signals to the microcontroller 24, which is programmed, according to the code for the range checking signal, to bounce back an acknowledgement signal via the transceiver 38. This signal is received by the transceiver 42 of the remote control unit and is decoded, the microcontroller 50 being so programmed as to check such an acknowledgement signal is received within a predetermined period of time. If no such acknowledgement signal is received, the microcontroller 24 causes an alarm to be emitted from that LED 54 associated with the detector being checked, as well as giving an audible alarm on the buzzer or speaker 56.

In this regard, relevant switching parts of the microcontroller 24 and the microcontroller 50 act as a range checking responder device 78 and a range checker 76, respectively.

Activation of the rocker switch 48 can be used to select that part of the menu display on the LCD display 46 for entering a desired PIN number. This is effective both for the remote control unit 40, as well as each bite detector 10 via the transceivers 38 and 42. In this regard, relevant switching devices of the microcontrollers 24 and 50 constitute respective security devices 80 and 82 of the detector 10 and the remote control unit 40.

The microcontrollers 24 and 50 are so programmed so that the detector 10 and remote control unit 40, respectively, cannot be operated without correct entry of the PIN number stored in the eeproms 36 and 60, respectively.

The microcontroller 24 is so programmed that any signal it receives from the reed switches 20 or the vibration sensor 22 will cause any other operation of the microcontroller to be suspended or overridden whilst such fish-bite signals persist. These signals are relayed via the transceiver 38 and the transceiver 42 to the relevant LED 54 and the buzzer or speaker 56 of the remote control unit 40.

In this regard, the microcontroller 50 is also programmed to override any operation it is executing in favour of the issuing of such an alarm signal.

During such overriding actions, the relevant switches within the microcontroller 24 constitute an override 83 of the detector 10, and other switching devices thereof constitute a fish-bite detector signal device 84. At the same time, relevant switches of the microcontroller 50 constitute an override 86 of the remote control unit 40.

A set of parameter adjustments, one set for each detector 10, may be stored in the eeprom 36 and/or 60, and any set may be selected by the rocker switch 21 or 48 and used to adjust the detector parameters accordingly, in the case of the eeprom 60 via the transceivers 38 and 42.

Different sets of parameter values may be stored in this way respectively for normal day-time fishing, normal night-time fishing, rough conditions, and so on.

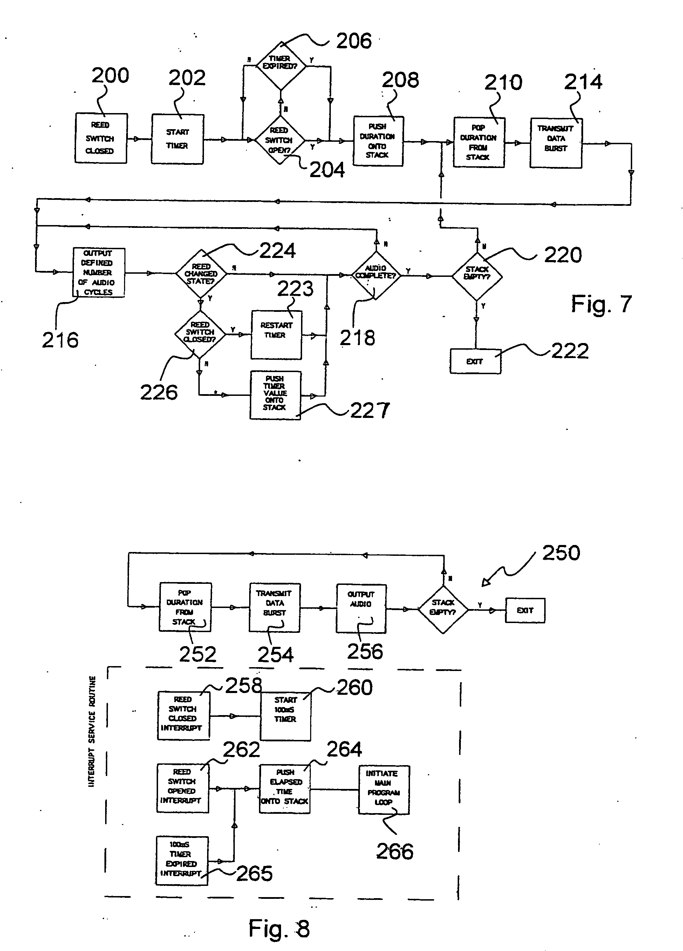

In the event of a fish-bite and consequent longitudinal line movement, a pulsed signal issued by the reed switches as they are opened and closed, is received by the microcontroller 24. The duration of each successive pulse is measured by a timer 100 of the microcontroller 24. In the event of reduced sensitivity, it may be that only some of the pulses from the reed switches are forwarded to the timer 100, and their duration may also be dependent upon whether the line is moving forwardly or backwardly. So, whether directly or indirectly as a result of activity of a reed switch, the leading edge of a pulse is issued at step 200 in Figure 7 to start the timer at step 202 of the programme executed by the microcontroller 24. By steps 204 and 206, either the trailing edge of the pulse or a 100 mS time out determines a count for the duration of the pulse which is pushed onto the stack of a stack memory 102 of the microcontroller 24 at step 208. At the next step 210 of the programme the oldest entry in the stack (which may be the entry just entered if the stack is a stack of only one entry) is popped from the stack at step 212 and at step 214 is forwarded as a data burst to the transceiver 38 which transmits the entry in coded form as a digital signal, including an indication of the identity of the detector doing the transmitting as well as the current tone setting. Immediately following that, at step 216, the popped entry is used to control the audio driver 34 and speaker 32 of the detector 10, so that the speaker 32 emits a succession of beeps of duration determined by the lengths of the successive pulses received by the timer 100. However, any transmission is completed before the corresponding beep from the speaker 32 commences.

The programme checks whether any given audio pulse or beep has ended, at step 218. If it has, it checks whether the stack is empty at step 220. If it is not, it causes the next entry in the stack to be popped. If the stack is empty the loop is exited at 222 and is only recommenced upon reception of another leading edge by the timer 100. If the audio pulse or beep has not ended, according to a polling by the programme at the step 218, the generation of a beep continues at step 216. During this beep, any further leading edges of pulses received by the timer 100 cause the timer 100 to restart at step 223, by the change of state check at 224, and the "reed switch closed'' check at 226. Directly a change of state occurs at step 224, caused by the trailing edge of a measured pulse, the duration indicated by the timer is pushed on the stack at step 227.

The transceiver 42 of the remote unit 40 receives the transmitted stack entry in code form and relays it to the microcontroller 50 via the slave microcontroller 44, the microcontroller 50 being programmed to cause the audio driver 58 and the speaker 56 to produce a sound signal having the same characteristics, being substantially simultaneous and synchronous with the sound signal produced by the speaker 32. This enables the user to interpret the sound, for example as to whether the fish is swimming towards the rod or away from it, and also whether it is accelerating or decelerating, by the sound from either or both the remote unit and the detector, the sounds being substantially synchronised so that no confusion arises.

It will be appreciated that the audio pulse ended check 218 acts to inhibit transmission during such a pulse, and the relevant switches in the microcontroller 24 that achieve this are represented as an inhibitor device 104 in the microcontroller 24. Because the transmission burst is brief for each audible indication pulse, rather than lasting the full length of the pulse or beep, the spectrum usage and the transmitter duty cycle are reduced.

It would be possible to use hard wiring interrupts instead of polling interrupts effected by running of a programme. This simplifies the flow chart to that shown in Figure 8, in which a main programme loop 250, comprising popping from the stack at 252, transmission of the popped entry at 254, and sounding of the speaker in accordance with the popped entry, in that order, is executed until the stack is empty. The switches in the microcontroller 24 to effect transmission before activation of the speaker 32 serve in this case as a sequencing device 104 of the microcontroller to ensure that no transmission occurs during a beep. In the meantime, a leading pulse edge at 258 starts the timer 100 at step 260. A trailing edge 262 causes the count in the timer 100 to be pushed onto the stack at 264, a 100mS timer expiry signal at 265 forcing such a push regardless of whether a trailing edge has yet been received by the timer 100. At each push, the main programme loop is recommenced at step 266 if it is not already running.

The manner of construction and operation of the apparatus avoids the need for power supply filtering, which would be relatively expensive and would reduce the space available on the circuit board of the detector. Furthermore distortion owing to excessive power consumption is avoided, and battery life is enhanced.

Various modifications to the illustrated devices may occur to the reader without taking the resulting apparatus outside the scope of the present invention. To give one example only, the rocker switches 20 and 48 and the LCD displays 26 and 46, could be replaced by a set of rotatable knobs to effect adjustment of various parameters of the detector 10. The remote control unit 40 may be adapted to control and monitor other radio-equipped accessories, such as a theft alarm or a bivvy light. The remote control unit 40 may be constructed to receive signals from detectors fitted with transmitters one way, from the detector to the remote, as well as to conduct two-way communications with detectors fitted with transceivers.

Current settings as well as pre-programmed settings, and also locked/unlocked states can be stored in the eeprom 36 and/or 60 to hold these settings in the event of battery failure or a nearly exhausted battery, enabling a return to those settings upon battery replacement or recharging of the battery.

When the detector is otherwise idle, programming of the microcontroller 24 is such as to ensure that it will default to receive mode, periodically checking for a signal from the remote unit 40. The checking is at relatively long time intervals, so that any coded signal from the remote unit 40 is repeated many times, or once with a long preamble to ensure that it is not missed.

The eeprom 36 and/or 60 is used to store the unique serial number of each and every detector or other peripheral device it is to control or to receive signals from.

## Claims

1. Angling apparatus comprising a fish-bite detector (10) having (a) a sensor (20) coupled to the line of a fishing rod when the apparatus is in use such as to issue pulsed line-movement signals of a duration indicative of the movement of the line and (b) a radio transmitter (38) connected to transmit transmitter signals corresponding to the pulsed line-movement signals, the apparatus further comprising a remote unit (40) having a radio receiver (42) and a signal generator coupled to the receiver (42) and adapted to generate pulsed line-movement signals corresponding to those generated by the sensor of the detector, in which the detector (10) and the receiver unit (40) have respective alarms (32, 56), especially but not exclusively audio alarms (32, 56), connected to produce alarm indications in dependence upon the pulsed line-movement signals, **characterised in that** the detector (10) is provided with a timer (100) connected to the sensor (20) to measure the duration of successive pulses of the pulsed line-movement signal, and a memory (102) connected to the timer (100) to store successive entries from the timer (100) respectively indicative of the lengths of a succession of such durations, an alarm driver (34) being connected to the memory (102) and to the alarm (32) of the detector (10) so that the alarm is activated for successive durations corresponding to the entries in the memory (102) in the same order as they were entered into the memory (102), and the transmitter (38) also being connected to the memory (102) so that the transmitter signals carry the entries to the receiver unit (40), the alarm (56) of the receiver unit (40) being connected to the radio receiver (42) so that it is also activated for successive durations corresponding to the entries in the memory (102) in the same order as they were entered into the memory (102).

2. Angling apparatus according to claim 1, **characterised in that** the memory (102) is a stack memory (102) capable of storing a stack of such entries, successive durations of successive pulses of the line-movement pulsed signal being pushed onto the stack from the timer (100) , and entries being popped from the stack in the order in which they were entered, to the transmitter (38) and to the alarm driver (34) of the detector (10).

3. Angling apparatus according to claim 2, **characterised in that** the detector (10) is provided with an inhibitor device (104) or a sequencing device connected to ensure that popping only occurs when the detector alarm (32) is not being activated.

## Patentansprüche

1. Angelvorrichtung, die einen Fischanbeißdetektor (10) mit (a) einem Sensor (20), der mit der Leine einer Angelrute gekoppelt ist, wenn die Vorrichtung in Gebrauch ist, derart, dass impulsartige Leinenbewegungssignale mit einer die Bewegung der Leine angebenden Dauer ausgegeben werden, und (b) einem Funksender (38), der so angeschlossen ist, dass er Sendersignale, die den impulsartigen Leinenbewegungssignalen entsprechen, sendet, wobei die Vorrichtung ferner eine entfernte Einheit (40) mit einem Funkempfänger (42) und einem Signalgenerator, der mit dem Empfänger (42) gekoppelt und so beschaffen ist, dass er impulsartige Leinenbewegungssignale erzeugt, die jenen entsprechen, die durch den Sensor des Detektors erzeugt werden, umfasst, wobei der Detektor (10) und die Empfängereinheit (40) jeweils ei-ne Alarmeinrichtung (32, 56) besitzen, die insbesondere, jedoch nicht ausschließlich, akustische Alarmeinrichtungen (32, 56) sind und so angeschlos-sen sind, dass sie in Abhängigkeit von den impulsartigen Leinenbewegungssignalen Alarme erzeugen, **dadurch gekennzeichnet, dass** der Detektor (10) versehen ist mit einem Zeitgeber (100), der mit dem Sensor (20) verbunden ist, um die Dauer aufeinander folgender Impulse des impulsartigen Leinenbewegungssignals zu messen, und mit einem mit dem Zeitgeber (100) verbundenen Speicher (102), um aufeinander folgende Eingänge von dem Zeitgeber (100), die jeweils die Längen einer Folge solcher Dauern angeben, zu speichern, wobei mit dem Speicher (102) und mit der Alarmeinrichtung (32) des Detektors (10) ein Alarmtreiber (34) verbunden ist, so dass die Alarmeinrichtung für aufeinander folgende Dauern, die den Einträgen im Speicher (102) in der gleichen Reihenfolge, in der sie in den Speicher (102) eingegeben wurden, entsprechen, aktiviert wird, wobei der Sender (38) ebenfalls mit dem Speicher (102) verbunden ist, so dass die Sendersignale die Einträge zu der Empfängereinheit (40) transportieren, wobei die Alarmeinrichtung (56) der Empfängereinheit (40) mit dem Funkempfänger (42) verbunden ist, so dass sie ebenfalls bei aufeinander folgenden Dauern aktiviert wird, die den Einträgen im Speicher (102) in der gleichen Reihenfolge, in der sie in den Speicher (102) eingegeben wurden, entsprechen.

2. Angelvorrichtung nach Anspruch 1, **dadurch gekennzeichnet, dass** der Speicher (102) ein Stapelspeicher (102) ist, der einen Stapel derartiger Einträge speichern kann, wobei aufeinander folgende Dauern aufeinander folgender Impulse des impulsartigen Leinenbewegungssignals von dem Zeitgeber (100) auf den Stapel geschoben werden und Einträge von dem Stapel in der Reihenfolge, in der sie eingegeben wurden, zu dem Sender (38) und zu dem Alarmtreiber (34) des Detektors (10) abgerufen werden.

3. Angelvorrichtung nach Anspruch 2, **dadurch gekennzeichnet, dass** der Detektor (10) versehen ist mit einer Sperrvorrichtung (104) oder einer Ablaufsteuervorrichtung, die so angeschlossen sind, dass sie sicherstellt, dass der Abruf nur erfolgt, wenn der Detektoralarm (32) nicht aktiviert ist.

## Revendications

1. Dispositif pour la pêche à la ligne, comprenant un détecteur de touches de poisson (10), ayant (a) un capteur (20) couplé à la ligne d'une canne à pêche lorsque le dispositif est en utilisation, de manière à envoyer des signaux pulsés de déplacement de ligne, d'une durée indicative du déplacement de la ligne, et (b) un émetteur radio (38), connecté pour transmettre des signaux d'émetteur correspondant aux signaux pulsés de déplacement de ligne, le dispositif comprenant en outre une unité distante (40) ayant un récepteur radio (42) et un générateur de signal, couplé au récepteur (42) et adapté pour générer des signaux pulsés de déplacement de ligne, correspondant à ceux ayant été générés par le capteur du détecteur, dans lequel le détecteur (10) et l'unité réceptrice (40) comprennent des alarmes (32, 56) respectives, spécialement mais non exclusivement des alarmes audio (32, 56), connectées pour produire des indications d'alarme selon les signaux pulsés de déplacement de ligne, **caractérisé en ce que** le détecteur (10) est équipé d'un minuteur (100), connecté au capteur (20) pour mesurer la durée des impulsions successives du signal pulsé de déplacement de ligne, et une mémoire (102) connectée au minuteur (100) pour stocker des entrées successives venant du minuteur (100), respectivement indicatives des longueurs d'une succession de telles durées, un pilote d'alarme (34) étant connecté à la mémoire (102) et à l'alarme (32) du détecteur (10), de manière que l'alarme soit activée pour des durées successives, correspondant aux entrées dans la mémoire (102), dans le même ordre que celui selon lequel selon lequel elles étaient entrées dans la mémoire (102), et l'émetteur (38) étant également connecté à la mémoire (102), de manière que des signaux d'émetteur transmettent les entrées à l'unité réceptrice (40), l'alarme (56) de l'unité réceptrice (40) étant connectée au récepteur radio (42), de manière qu'il soit également activé pour des durées successives correspondant aux entrées dans la mémoire (102), dans le même ordre que celui selon lequel elles sont entrées dans la mémoire (102).

2. Dispositif pour la pêche à la ligne selon la revendication 1, **caractérisé en ce que** la mémoire (102) est une mémoire à piles (102) capable de stocker une pile de telles entrées, des durées successives d'impulsions successives du signal pulsé de déplacement de ligne étant poussées sur la pile par le minuteur (100), et des entrées étant éliminées de la pile, dans l'ordre dans lequel elles sont entrées, au transmetteur (38) et au pilote d'alarme (34) du détecteur (10).

3. Dispositif pour la pêche à la ligne selon la revendication 2, **caractérisé en ce que** le détecteur (10) est muni d'un dispositif inhibiteur (104) ou d'un dispositif de séquencement, connecté pour assurer que l'élimination ne se produit que lorsque le détecteur d'alarme (32) n'est pas activé.
